(19) Europäisches Patentamt
European Patent Office
Office européen des brevets

(11) **EP 2 861 629 B1**

(12) **EUROPÄISCHE PATENTSCHRIFT**

(45) Veröffentlichungstag und Bekanntmachung des Hinweises auf die Patenterteilung:
**13.04.2016 Patentblatt 2016/15**

(21) Anmeldenummer: **13731093.4**

(22) Anmeldetag: **18.06.2013**

(51) Int Cl.:
*C08C 19/00* (2006.01)     *C08C 19/20* (2006.01)
*C08L 15/00* (2006.01)

(86) Internationale Anmeldenummer:
**PCT/EP2013/062656**

(87) Internationale Veröffentlichungsnummer:
**WO 2013/189947 (27.12.2013 Gazette 2013/52)**

(54) **HOCH MOONEY NDBR MIT MOONEYSPRUNG**

HIGH MOONEY NDBR WITH MOONEY JUMP

CAOUTCHOUC BUTADIÈNE POLYMÉRISÉ PAR CATALYSEUR AU NÉODYME PRÉSENTANT UN SAUT DE VISCOSITÉ MOONEY ÉLEVÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2012 EP 12172485**

(43) Veröffentlichungstag der Anmeldung:
**22.04.2015 Patentblatt 2015/17**

(73) Patentinhaber: **LANXESS Deutschland GmbH 50569 Köln (DE)**

(72) Erfinder:
• **KLOPPENBURG, Heike 40625 Düsseldorf (DE)**
• **GROSS, Thomas 42489 Wülfrath (DE)**
• **LUCASSEN, Alex NL-7597 NE Sassveld (NL)**
• **HARDY, Dave NL-2353 MS Leiderdorp (NL)**
• **ZHANG, Yan 51375 Leverkusen (DE)**
• **LE-SATTLER, Alicia 44793 Bochum (DE)**

(56) Entgegenhaltungen:
**EP-A1- 0 707 017     EP-A1- 1 123 940
EP-A2- 1 650 227**

## Beschreibung

Die Erfindung betrifft ein Verfahren zur sprungartigen Erhöhung der Mooney-Viskosität bei der Herstellung von hochmolekularem Polybutadien mit einem hohen Anteil an cis-1,4-Einheiten von > 95 Gew.-% und einem geringen Anteil an 1,2-Vinyl-Gehalt von < 1 Gew.-%.

Polybutadiene werden als wichtige Bestandteile von Kautschukmischungen in der Reifenindustrie eingesetzt, wobei eine Verbesserung der Endeigenschaften, wie etwa eine Reduktion des Rollwiderstandes und des Abriebes gewünscht wird. Ein weiteres Anwendungsfeld sind Golfballkerne oder Schuhsohlen, wobei hier eine hohe Rückprallelastizität im Vordergrund steht.

Polybutadiene mit einem hohen Anteil an cis-1,4-Einheiten werden seit längerer Zeit in großem technischen Maßstab produziert und für die Herstellung von Reifen und anderen Gummiwaren sowie zur Schlagzähmodifizierung von Polystyrol eingesetzt.

Zur Erzielung hoher Anteile an cis-1,4-Einheiten werden derzeit fast ausschließlich Katalysatoren auf Basis von Verbindungen der Seltenen Erden eingesetzt, wie beispielsweise in EP-A 1 0 011 184 und EP-B-A1 0 007 027 beschrieben. Die Beispiele EP 1 123 940 A1 und EP 1 650 227 beschreiben die Herstellung von Dien(co)polymer mit Erhöhung der Mooney-Viskosität.

Aus dem Stand der Technik ist bekannt, dass speziell Neodym-katalysierte Polybutadiene in der Gruppe der hoch-cis-Polybutadiene besonders vorteilhafte Eigenschaften hinsichtlich Rollwiderstand, Abrieb und Rückprallelastizität aufweisen. Bei der Herstellung von Polybutadienen spielen die eingesetzten Katalysatorsysteme eine wichtige Rolle.

Der technisch eingesetzte Neodymkatalysator beispielsweise ist ein Ziegler/Natta-System, das aus mehreren Katalysatorkomponenten gebildet wird. Bei der Katalysatorbildung werden meist unterschiedliche Katalysatorzentren gebildet, die sich im Polymer anhand einer mindestens bimodalen Molmassenverteilung erkennen lassen. Im Ziegler/Natta-Katalysatorsystem werden die bekannten 3 Katalysatorkomponenten, meist bestehend aus einer Neodymquelle, einer Chloridquelle und einer Aluminiumorganischen Verbindung in verschiedenster Art und Weise unter bestimmten Temperaturbedingungen vermischt, wobei das Katalysatorsystem mit oder ohne Alterung für die Polymerisation vorbereitet wird.

Aus dem Stand der Technik sind mehrere Herstellungsverfahren für Ziegler/Natta-Katalysatorsysteme bekannt, welche zur Herstellung von Polybutadienen eingesetzt werden.

Aus dem Stand der Technik ist ebenfalls die EP 0 127 236 bekannt, in der der Katalysator durch die Vermischung von Neodymoxiden, Neodymalkoholaten und Carboxylaten mit einem Organometallhalogeniden sowie einer organischen Verbindung bei einer Temperatur von 20°C bis 25°C hergestellt wird. Es ist auch möglich, die Vermischung dieser 4 Komponenten bei 50°C bis 80°C durchzuführen. Bei dieser Variante wird die Mischung auf 20 bis 25°C abgekühlt, sodann wird DIBAH zugefügt. Eine Alterung wird nicht erwähnt.

Aus EP 1 176 157 B1 ist ein Verfahren zur Herstellung von Polybutadienen mit verringertem Verhältnis Lösungsviskosität /Mooney-Viskosität bekannt, in dem die Katalysatorenherstellung mit Präformierung durchgeführt wird. Dabei wird zunächst das Neodymversatat mit DIBAH und Isopren bei 50°C vermischt, anschließend wird diese Mischung auf 5°C abgekühlt, danach wird Ethylaluminiumsesquichlorid (EASC) zugegeben. Die Alterung kann mehrere Minuten bis mehrere Tage dauern bei einer Temperatur zwischen 10°C und -80°C. Während der Polymerisation werden Comonomeren, wie beispielsweise ein Bisdien, hinzugefügt, um den Verzweigungsgrad des Polymers zu erhöhen und somit auch das sehr enge Verhältnis Lösungsviskosität / Mooney-Viskosität zu erhalten. Das dabei erhaltene verzweigte Polymer hat pro Molekül durch die Kopplung über das Bisdien mindestens 4 freie Kettenenden, während lineare Moleküle nur 2 Kettenenden besitzen.

Die Anzahl der Kettenenden im Polymer ist für die Energiedissipation verantwortlich. Je höher die Anzahl an freien Kettenenden, desto höher ist die Energiedissipation durch das Polymer. Je geringer jedoch die Energiedissipation des Polymers ist, desto geringer ist beispielsweise der Rollwiderstand und desto besser ist die Rückprallelastizität des Polymers. Dementsprechend sind die Endeigenschaften eines linearen Polymers mit nur 2 Kettenenden pro Molekül immer besser als die eines verzweigten Polymers bei gleicher Molmasse.

Es ist bekannt, dass kommerziell hergestellte Polymere eine statistische Molmassenverteilung besitzen, wobei die Breite der Molmassenverteilung durch die Katalysatorherstellung beeinflusst wird.

Die Bezeichnung "sprungartige Erhöhung der Mooney-Viskosität" und ihre Abwandlungen, wie etwa "Mooney-Sprung" oder "Mooney-Jump", beziehen sich auf Techniken, nach denen die Mooney-Viskosität der Polymere bedeutend erhöht wird.

Das Molekulargewicht von elastomeren ungesättigten Dienpolymeren anzuheben, ist aus verschiedenen Gründen wichtig. Dies gestattet zunächst die Erzeugung von niedermolekularen Basispolymeren, was den großen Vorteil hat, bei den üblicherweise angewandten Lösungspolymerisationstechniken niedrigere Viskositäten im "cement" (Lösung des Polymeren in dem organischen Lösungsmittelmedium, das bei der Polymerisation verwendet wird) zu bringen und einen Betrieb mit höheren Feststoffgehalten im "cement" erlaubt, da ein besserer Wärmetransport erreicht wird. Auch kann der Coldflow derartiger Dienpolymeren vermindert werden, so dass sie stärker mit Öl verstreckt werden können.

Aus dem Stand der Technik ist allgemein bekannt, dass die Erzeugung hochmolekulargewichtiger Polymere, insbesondere hochmolekulares Neodym-katalysiertes Polybutadiens, direkt unter Anwendung von Lösungspolymerisationsverfahren aufgrund der hohen Lösungsviskositäten besonders schwierig und unwirtschaftlich ist. Es bestehen Schwierigkeiten beim Rühren. Zudem kommt es zu einer Heterogenität beim Polymerisationssystem und einer drastische Verminderung im Wärmetransport. Die direkte Polymerisation bis zu hohen Molekulargewichten würde daher eine Polymerproduktion bei geringeren Geschwindigkeiten durch Herabsetzung des Feststoffgehalts im Reaktionsraum notwendig machen. Eine solche Verfahrensweise erhöht die Kosten der Polymerherstellung beträchtlich.

Es ist zwar bekannt, dass durch Präformierung von Nd-Katalysatoren die Katalysatorwirkung verändert werden kann. Solche präformierte Nd-Katalysatoren liefern Polymerisate mit relativ niedrigem cold-flow, jedoch sinkt durch das Präformieren meist die Katalysatoraktivität, so dass der Verbrauch an Neodym zum Teil beträchtlich ansteigt.

Es ist weiterhin bekannt, dass man Polydiene mit niedrigem cold-flow herstellen kann, wenn man die Dienpolymere nach der Polymerisation mit Dischwefeldichlorid, Schwefeldichlorid, Thionylchlorid, Dischwefeldibromid oder Thionylbromid behandelt (DE-AS 12 60 794). Nachteilig bei dem in der DE-AS 12 60 794 beschriebenen Verfahren zur Herstellung kautschukelastischer Dienpolymere ist jedoch, dass dieses Verfahren für hochmolekulares Neodym-katalysiertes Polybutadien nicht geeignet ist, wenn der Mooney-Sprung um mindestens 50 % höher als die Mooney-Viskosität des Polymers nach der Polymerisation betragen soll. Denn das "Sprung-Polymer" weist eine Gelbildung auf, was die Reaktorstandzeit aufgrund der Wandablagerung im Reaktor verringert wird. Die Wartung und Reinigung der Reaktoren bedeutet hohe Zeit- und Kostenaufwendung. Weiterhin besteht die Gefahr, dass das Polymer selbst Gelanteile aufweist und somit nicht mehr für Reifenanwendungen eingesetzt werden kann.

Die DE 44 36 059 A1 beschreibt ebenfalls ein Verfahren zur sprungartigen Erhöhung des Molekulargewichts von Nd-katalysierten Dienkautschuken, wobei der Eigengeruch des Polymers durch einen Entspannungsschritt nach der Polymerisation durchgeführt wird, um alle niedrigsiedende Bestandteile des Reaktionsgemisches zu entfernen. Der Mooney-Sprung liegt hier bei ca. 27 % höher als die Mooney-Viskosität des Dienkautschuks nach der Polymerisation.

Die Aufgabe der vorliegenden Erfindung besteht also darin, ein einfaches, wirksames und wirtschaftliches Verfahren zur sprungartigen Erhöhung der Mooney-Viskosität zur Verfügung zu stellen, wobei die sprungartige Erhöhung der Mooney-Viskosität um mindestens 50% höher ist als die Mooney-Viskosität des Polymers nach der Polymerisation und gleichzeitig keine Gelbildung bzw. keine signifikante Gelbildung aufweist.

Zur Lösung der Aufgabe wird ein Verfahren der eingangs genannten Art vorgeschlagen, bei dem man

1) mindestens ein Monomer, ausgewählt aus Butadien oder Isopren, in Gegenwart mindestens eines inerten, organischen Lösungsmittels und in Gegenwart von mindestens einem Katalysator auf Basis von Neodymcarboxylat bei Temperaturen von -20°C bis 150 °C polymerisiert,

2) anschließend die Polymerisation durch Zugabe von protischen Verbindungen stoppt und

3) danach zum Polymerisat Schwefelchloride zugibt, wobei das Schwefelchlorid vor der Zugabe mit einer Carbonsäure, Fettsäure und/oder Fettsäureester behandelt wird.

Die Zugabe von Schwefelchloriden zum Polymerisat wird auch als "Modifizierung" des Polymers verstanden.

Durch die Behandlung der Schwefelchloride vor der Zugabe mit einer Carbonsäure, Fettsäure und/oder Fettsäureester konnte überraschend festgestellt werden, dass eine größere "Sprung-Reaktion" bzw. Modifizierung erreicht werden kann, ohne dass dabei eine unerwünschte Gelbildung auftritt.

Es wird angenommen - allerdings ohne sich auf irgendeine Theorie festlegen zu wollen - dass durch die Behandlung mit einer Carbonsäure, Fettsäure und/oder Fettsäureester die Löslichkeit des Schwefelchlorids im Polymerisationslösungsmittel, insbesondere Hexan, verbessert und somit eine einheitliche Verteilung des Schwefelchlorids im Polymerisat gewährleistet wird, so dass lokale Vernetzungen vermieden, zumindert reduziert werden kann. Dies bedeutet die Vermeidung bzw. Reduzierung von Gelbildungen. Die Reaktivität des Schwefelchlorids kann somit kontrolliert bzw. gesteuert werden.

Es konnte überraschend festgestellt werden, dass der Gelgehalt des nach dem erfindungsgemäßen Verfahren hergestellten Polybutadiens bevorzugt kleiner als 1 Gew.-%, vorzugsweise kleiner als 0,3 Gew.-%, besonders bevorzugt kleiner als 0,2 Gew.-% beträgt. Die Methode zur Bestimmung des Gelgehalts ist unten beschrieben.

Zur Klarstellung der Begrifflichkeiten werden verstanden:

Ausgangsmooney-Viskosität: Mooney-Viskosität (ML 1+4 100°C) nach der Polymerisation des Polymers, d. h. nach Schritt 2).

Endmooney-Viskosität: Mooney-Viskosität (ML 1+4 100°C) nach der Modifizierung bzw. Mooney-Sprung oder Sprung-Reaktion des Polymers (Sprung-Polymer), d. h. nach Schritt 3).

Sprung-Polymer: Hochmolekulares Polybutadien nach der Modifizierung, nach dem Mooney-Sprung oder nach der Sprung-Reaktion

Bevorzugt werden Ziegler-Natta-Katalysatoren auf Basis von Verbindungen der Seltenen Erdmetalle eingesetzt, wie Cer-, Lanthan-, Praseodym-, Gadolinium- oder Neodymverbindungen, die in Kohlenwasserstoffen löslich sind. Besonders bevorzugt werden die entsprechenden Salze der Seltenen Erdmetalle als Ziegler-Natta-Katalysatoren eingesetzt, wie Neodymcarboxylate, insbesondere Neodymneodecanoat, Neodymoctanoat, Neodymnaphthenat, Neodym-2,2-diethyl-hexanoat oder Neodym-2,2-diethyl-heptanoat, sowie die entsprechenden Salze des Lanthans oder Praseodyms. Weiterhin umfassen die einsetzbaren Ziegler-Natta-Katalysatoren auch Katalysatorsysteme auf Basis von Metallocenen, wie z.B. beschrieben in EP-A 1025136 und EP-A 1078939.

Bevorzugt wird das erfindungsgemäße Verfahren anhand folgender Verfahrensschritte durchgeführt:

a) Katalysatorenherstellung mit oder ohne Präformierung unter der Verwendung von Katalysatorsystemen basierend auf Neodym bestehend aus

- Komponente A: einem Alkoholat oder einem Carboxylat von Neodym, vorzugsweise Neodymversatat,
- Komponente B: einem Dialkylaluminiumhydrid, vorzugsweise Diisobutylaluminiumhydrid (DIBAH),
- Komponente C: einem Dien, vorzugsweise Butadien oder Isopren und
- Komponente D: wenigstens einer Organometallhalogenide, vorzugsweise Ethylaluminiumsesquichlorid (EASC),

b) Polymerisation der Monomere bei einer Temperatur zwischen -20°C und 150°C,

c) Stoppen der Polymerisation mit protischen Verbindungen und

d) Zugabe von Schwefelchloriden, wobei die Schwefelchloriden vor der Zugabe mit einer Carbonsäure, Fettsäure und/oder Fettsäureester behandelt werden/wird.

Als Diene können Butadien, Isopren, Pentadien und 2,3-Dimethylbutadien eingesetzt werden, insbesondere Butadien und Isopren. Die genannten Diene können sowohl einzeln als auch im Gemisch untereinander eingesetzt werden, dass entweder Homopolymerisate oder Copolymerisate der genannten Diene entstehen.

Nachdem das Katalysatorsystem erzeugt wurde, wird die Polymerisation in organischen Lösungsmitteln ausgeführt. Diese Lösungsmittel müssen inert gegenüber dem verwendeten Katalysatorsystem sein. Geeignet sind z.B. aromatische, aliphatische und cycloaliphatische Kohlenwasserstoffe wie Benzol, Toluol, Pentan, n-Hexan, iso-Hexan, Heptan, isomere Pentane und Cyclohexan. Diese Lösungsmittel können einzeln oder in Kombination verwendet werden. Bevorzugt sind Cyclohexan und n-Hexan. Ebenfalls möglich ist die Abmischung mit polaren Lösungsmitteln.

Die inerten, organischen Lösungsmittel werden in Mengen von 200 bis 900 Gew.- Teilen, bezogen auf 100 Gew.-Teile Monomere, eingesetzt. Bevorzugt sind Mengen von 300 bis 500 Gew.-Teile.

Die Polymerisation kann sowohl kontinuierlich als auch diskontinuierlich durchgeführt werden.

Die Polymerisation wird bei einer Temperatur zwischen -20°C und 150°C, bevorzugt zwischen 0 und 130°C, durchgeführt.

Die Polymerisation kann nach üblichen Verfahren ein- oder mehrstufig, in diskontinuierlicher oder in kontinuierlicher Fahrweise erfolgen. Bevorzugt ist die kontinuierliche Fahrweise in einer Reaktorkaskade, bestehend aus mehreren, bevorzugt mindestens 2, insbesondere 2 bis 6 Reaktoren.

Nach Erreichen des gewünschten Umsatzes wird der Katalysator üblicher Weise durch Zusatz von protischen Verbindungen deaktiviert, d. h. die Polymerisation wird gestoppt. Die Menge an protischen Verbindungen beträgt vorzugsweise 0 bis 1 phr bezogen auf das eingesetzte Monomer.

Bevorzugt handelt es sich bei den protischen Verbindungen um Carbonsäuren und/oder Fettsäuren.

Bevorzugt werden Stearinsäure oder Laurinsäure zur Deaktivierung der Polymerisation eingesetzt.

Weiterhin ist es möglich, nach Erreichen des gewünschten Umsatzes den Katalysator mit einer oder mehreren reaktiven polaren organischen Verbindungen umzusetzen, die nach der Reaktion mit dem Katalysator als funktionelle Endgruppe an die Polymerkette angelagert werden kann.

Es ist ebenso möglich, aber nicht zwingend, einen Entspannungsschritt nach der Polymerisation durchzuführen, um alle niedrigsiedende Bestandteile des Polymerisats zu entfernen.

Das so erhaltene Polymerisat wird mit Schwefelchloriden versetzt, wobei die Schwefelchloride mit Carbonsäure, Fettsäure und/oder Fettsäureester vorbehandelt werden. Für die Vorbehandlung werden die Schwefelchloride mit Carbonsäure, Fettsäure und/oder Fettsäureester versetzt.

Vorzugsweise wird ein Mengenverhältnis von Schwefelchloriden zu Carbonsäure, Fettsäure und/oder Fettsäureester 1 : 0,01 bis 1 : 10 eingesetzt.

Bevorzugt handelt es sich bei der Carbonsäure um ausgewählte Verbindungen aus der Gruppe der Carbonsäuren mit 8 bis 20 Kohlenstoffatomen, wie Versaticsäure, Octansäure oder iso-Octansäure.

Bevorzugt handelt es sich bei der Fettsäure um gesättigte, einfach oder mehrfach ungesättigte pflanzliche oder tierische Fettsäuren, wie Laurinsäure, Myristinsäure, Palmitinsäure oder Ölsäure.

Bevorzugt handelt es sich bei dem Fettsäureester um natürliche oder modifizierte, gesättigte, einfach oder mehrfach ungesättigte pflanzliche oder tierische Fettsäureester, wie epoxydiertes Sojabohnenöl (ESBO).

Bevorzugt handelt es sich bei den Schwefelchloriden um Dischwefeldichlorid, Schwefeldichlorid und/oder Thionylchlorid. Besonders bevorzugt wird die Modifizierung mit Dischwefeldichlorid durchgeführt.

Im Allgemeinen werden 0,05 bis 0,7 Gew.-Teile, bevorzugt 0,1 bis 0,4 Gew.-Teile, Schwefelchloride, bevorzugt Dischwefeldichlorid, auf 100 Gew.-Teile Dienkautschuk zugegeben.

Die Modifizierung erfolgt üblicherweise bei Temperaturen von 20°C bis 150°C, bevorzugt bei 50 bis 120°C.

Bei dem erfindungsgemäßen Verfahren werden die mit Carbonsäure, Fettsäure und/oder Fettsäureester vorbehandelten Schwefelchloride etwa 5 bis 60 Minuten mit dem Polymerisat gerührt.

Der Polymerlösung können vor der Aufarbeitung übliche Stabilisatoren in üblichen Mengen zugesetzt werden. Als Stabilisatoren werden z.B. sterisch gehinderte Phenole, wie z.B. 2,6-Di-tert.Butyl-4,5-methyl-phenol, 4,6-bis (octylthiomethyl)-o-cresol oder Octadecyl-3-(3,5-di-tert-butyl-4-hydroxyphenyl)propionat oder aromatische Amine, wie N-(1,3-Dimethylbutyl)-N'-phenyl-para-phenylendiamin oder Phosphite, wie z.B. Tris(nonylphenyl)phosphit. Es können auch andere handelübliche Stabilisatoren eingesetzt werden.

Die Isolierung der Polymeren erfolgt durch Eindampfen der Polymerlösung, durch Fällen mit einem Nichtlösungsmittel wie beispielsweise Methanol, Ethanol, Aceton oder bevorzugt durch Wasserdampfdestillation des Lösungsmittels.

Nach dem Strippen mit Wasserdampf erfolgt die Wasserentfernung mit geeigneten Sieb- oder Schneckenaggregaten wie Expeller- bzw. Expander-Schnecken oder Fließbetttrockner.

Die Trocknung erfolgt nach den üblichen Verfahren, z.B. im Trockenschrank oder in einem Schneckentrockner.

Das nach dem erfindungsgemäßen Verfahren hergestellte hochmolekulare Polybutadien weist eine Mooney-Viskosität (ML 1+4 bei 100°C) nach Schritt 3) um mindestens 50% höher als die Mooney-Viskosität des Polybutadiens nach Schritt 2) auf.

Vorzugsweise weist das erfindungsgemäße hochmolekulare Polybutadien (NdBR) eine Ausgangsmooney-Viskosität von mindestens 20 MU (ML 1+4 bei 100°C), bevorzugt 20 - 25 (ML 1+4 bei 100°C) MU, besonders bevorzugt mindestens 40 MU (ML 1+4 bei 100°C) auf und nach Zugabe von Schwefelchloriden, wie etwa Dischwefeldichlorid, Schwefeldichlorid und/oder Thionylchlorid, eine Endmooney-Viskosität von mindestens 30 MU (ML 1+4 bei 100°C), bevorzugt 40 - 50 MU (ML 1+4 bei 100°C), besonders bevorzugt 60 -80 MU (ML 1+4 bei 100°C), wobei keine Gelbildung bzw. Signifikant reduzierter Gelbildung vorliegt. Vorzugsweise ist der Gelgehalt kleiner als 1 Gew.-%.

Die Ausgangs-Viskosität bezieht sich auf die Mooney-Viskosität des Polybutadiens nach der Polymerisation.

Es ist ebenfalls möglich, mittels der Mooney-Stress-Relaxation gemäß ASTM D 1646-00 (MSR) den Mooney-Sprung zu bestimmen. Hierbei werden der MSR-Werte nach dem Schritt 2) und Schritt 3) gemessen. Der Quotient aus der MSR (2) und MSR (3) ergibt den Modifizierungskoeffizienten. Der MSR-Wert wird bei 100°C gemäß der Standardmethode ASTM D 1646-00 gemessen.

Vorzugsweise weist das erfindungsgemäße Polybutadien einen Modifizierungskoeffizienten von 1,3 bis 2,5, bevorzugt von 1,4 bis 2,1, auf.

Eine weitere Erfindung ist ein hochmolekulares Neodym-katalysiertes Polybutadien erhältlich nach dem erfindungsgemäßen Verfahren.

Vorzugsweise weist das erfindungsgemäße hochmolekulare Neodym-katalysierte Polybutadien Carbonsäure, Fettsäure und/oder Fettsäureester auf. Insbesondere sind natürliche oder modifizierte, gesättigte, einfach oder mehrfach ungesättigte pflanzliche oder tierische Fettsäureester, insbesondere epoxydiertes Sojabohnenöl, oder Versaticsäure, Octansäure, iso-Octansäure, Laurinsäure, Myristinsäure, Palmitinsäure oder Ölsäure im erfindungsgemäßen Neodymkatalysierte Polybutadien nachweisbar. Dem Fachmann sind die üblichen Nachweisemethoden beispielsweise mittels Dünnschichtchromatograhie, Gaschromatographie, HPLC oder Massenspektroskopie bekannt, ggf. werden die Carbonsäure, Fettsäure und/oder Fettsäureester vorher extrahiert/isoliert.

Das erfindungsgemäße hochmolekulare Neodym-katalysierte Polybutadien bedarf keiner Zusätze an Extenderoele, wie z. B. aromatische Extenderoele, um die Mooney-Viskosität der Kautschuke einzustellen.

Die erfindungsgemäßen Polybutadiene können alleine, im Verschnitt mit aromatischen oder aliphatischen Ölen oder im Gemisch mit anderen Kautschuken verwendet werden. Für die Herstellung von Kautschukvulkanisaten eignen sich als zusätzliche Kautschuke neben Naturkautschuk auch Synthesekautschuke. Bevorzugte Synthesekautschuke sind beispielsweise bei W. Hofmann, Kautschuktechnologie, Gentner Verlag, Stuttgart 1980 und I. Franta, Elastomers and Rubber Compounding Materials, Elsevier, Amsterdam 1989 beschrieben. Sie umfassen u.a.

| BR | - | herkömmliches Polybutadien |
| ABR | - | Butadien/Acrylsäure-C1-C4-alkylester-Copolymere |
| CR | - | Polychloropren |
| IR | - | Polyisopren |
| SBR | - | Styrol/Butadien-Copolymerisate mit Styrolgehalten von 1 bis 60, vorzugsweise 20 bis 50 Gew.-% |
| IIR | - | Isobutylen/Isopren-Copolymerisate |
| NBR | - | Butadien/Acrylnitril-Copolymere mit Acrylnitrilgehalten von 5 bis 60, vorzugsweise 10 bis 40 Gew.-% |
| HNBR | - | teilhydrierter oder vollständig hydrierter NBR-Kautschuk |
| EPDM | - | Ethylen/Propylen/Dien-Copolymerisate |

sowie Mischungen dieser Kautschuke. Für die Herstellung von Kfz-Reifen mit Hilfe der oberflächenmodifizierten Füllstoffe sind insbesondere Naturkautschuk, Emulsions-SBR sowie Lösungs-SBR-Kautschuke mit einer Glastemperatur oberhalb von -50°C, die gegebenenfalls mit Silylethern oder anderen funktionellen Gruppen, modifiziert sein können, wie in der EP-A-0 447 066 beschrieben, Polybutadienkautschuk mit hohem 1,4-cis-Gehalt (>90 Gew.-%), der mit Katalysatoren auf Basis Ni, Co, Ti oder Nd hergestellt wird, sowie Polybutadienkautschuk mit einem Vinylgehalt von 0 bis 75 Gew.-% sowie deren Mischungen von Interesse.

Die Kautschukmischungen stellen einen weiteren Gegenstand der Erfindung dar und enthalten in der Regel 5 bis 300 Gew.-Teile eines aktiven oder inaktiven Füllstoffs, wie z.B.

- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 $m^2$/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn-, Zr-, Ti-oxiden vorliegen,

- synthetische Silikate, wie Aluminiumsilikat, Erdalkalisilikat wie Magnesiumsilikat oder Calciumsilikat, mit BET-Oberflächen von 20 bis 400 $m^2$/g und Primärteilchendurchmessern von 10 bis 400 nm,

- natürliche Silikate, wie Kaolin und andere natürlich vorkommende Kieselsäure,

- Glasfasern und Glasfaserprodukte (Matten, Stränge) oder Mikroglaskugeln,

- Metalloxide, wie Zinkoxid, Calciumoxid, Magnesiumoxid, Aluminiumoxid,

- Metallcarbonate, wie Magnesiumcarbonat, Calciumcarbonat, Zinkcarbonat,

- Metallhydroxide, wie z.B. Aluminiumhydroxid, Magnesiumhydroxid,

- Metallsalze, wie z.B. Zink- oder Magnesiumsalze von [alpha],[beta]-ungesättigten Fettsäuren, wie z.B. Acryl- oder Methacrylsäure mit 3 bis 8 Kohlenstoffatomen, wie Zinkacrylat, Zinkdiacrylat, Zinkmethacrylat, Zinkdimethacrylat und Mischungen davon;

- Ruße. Die hierbei zu verwendenden Ruße sind nach dem Flammruß, Furnace- oder Gasrußverfahren hergestellt und besitzen BET-Oberflächen von 20 bis 200 m2/g, wie z.B. SAF-, ISAF-, HAF-, FEF- oder GPF-Ruße.

- Kautschukgele, insbesondere solche auf Basis Polybutadien, Butadien/Styrol-Copolymere, Butadien/Acrylnitril-Copolymere und Polychloropren.

Besonders bevorzugt werden Zinkdiacrylate, hochdisperse Kieselsäuren und Ruße.

Die genannten Füllstoffe können alleine oder im Gemisch eingesetzt werden. In einer besonders bevorzugten Ausführungsform enthalten die Kautschukmischungen als Füllstoffe ein Gemisch aus hellen Füllstoffen, wie hochdispersen Kieselsäuren, und Rußen, wobei das Mischungsverhältnis von hellen Füllstoffen zu Rußen bei 0,05 bis 20, bevorzugt 0,1 bis 10 liegt.

Die Füllstoffe werden bevorzugt als Feststoffe oder als Aufschlämmung in Wasser oder einem Lösungsmittel zur Lösung des/der erfindungsgemäßen Polybutadiene hinzugegeben. Die Kautschuklösung kann vorher hergestellt werden, bevorzugt wird aber die aus der Polymerisation stammende Lösung direkt eingesetzt. Anschließend wird das Lösungsmittel thermisch oder bevorzugt mit Hilfe von Dampf entfernt. Die Bedingungen dieses Stripp-Prozesses lassen sich leicht durch Vorversuche ermitteln.

Weiterhin bevorzugt werden die Füllstoffe zum festen erfindungsgemäßen Polybutadien oder einem Gemisch aus Kautschuken hinzugegeben und auf bekannte Weise, z.B. mit einem Kneter, eingemischt.

Die erfindungsgemäßen Kautschukmischungen enthalten gegebenenfalls weiterhin Vernetzer. Als Vernetzer können Schwefel oder Peroxide eingesetzt werden, wobei Schwefel besonders bevorzugt wird. Die erfindungsgemäßen Kautschukmischungen können weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren wie Triethanolamin, Polyethylenglykol, Hexantriol etc. die der Gummündustrie bekannt sind.

In den bevorzugten Kautschukmischungen mit hochaktiven gefällten Kieselsäuren ist die Verwendung von zusätzlichen Füllstoffaktivatoren besonders vorteilhaft. Bevorzugte Füllstoffaktivatoren sind schwefelhaltige Silylether, insbesondere Bis-(trialkoxisilyl-alkyl)-polysulfide, wie in DE-A-2 141 159 und DE-A-2 255 577 beschrieben, oligomere und/oder polymere schwefelhaltige Silylether der DE-A-4 435 311 und EP-A-0 670 347, Mercaptoalkyltrialkoxisilane, insbesondere Mercaptopropyltriethoxysilan und Thiocyanatoalkylsilylether, wie z.B. in DE-A-195 44 469 beschrieben.

Die Kautschukhilfsmittel werden in üblichen Mengen, die sich unter anderem nach dem Verwendungszweck richten, eingesetzt. Übliche Mengen sind z.B. Mengen von 0,1 bis 50 Gew.-%, bezogen auf Kautschuk.

Die weitere Abmischung der Kautschuke mit den anderen erwähnten Kautschukhilfsprodukten, Vernetzern und Beschleunigern kann in üblicher Weise mit Hilfe von geeigneten Mischaggregaten, wie Walzen, Innenmischer und Mischextruder, durchgeführt werden.

Die Compoundierung und Vulkanisation wird beispielsweise näher in Encyclopedia of Polymer Science and Engineering, Vol. 4, S. 66 ff (Compoundierung) und Vol. 17, S. 666 ff (Vulkanisation) beschrieben.

Die Vulkanisation der erfindungsgemäßen Kautschukmischungen kann bei üblichen Temperaturen von 100 bis 200°C, bevorzugt 130 bis 180°C (gegebenenfalls unter Druck 10 bis 200 bar), erfolgen.

Die erfindungsgemäßen Kautschukmischungen eignen sich hervorragend zur Herstellung von Formkörpern aller Art.

Nichtlimitierende Beispiele dieser Formkörper sind O-Ringe, Profile, Dichtungen, Membranen, Reifen, Reifenlaufflächen, Dämpfelemente und Schläuche.

Besonders bevorzugt werden verschiedene Reifenbauteile und Reifenlaufflächen.

Weiterhin eignen sich die erfindungsgemäßen Kautschukmischungen zur Schlagzähmodifikation von Thermoplasten, insbesondere von Polystyrol und Styrol-/Acrylnitrilcopolymere.

Besonders geeignet ist die Verwendung der Kautschukmischungen für Golfbälle, insbesondere Golfballkerne.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Nachstehend wird die Erfindung anhand von Beispielen näher erläutert.

### I. Herstellung von hochmolekularen Neodym-katalysierten Polybutadienen (NdBR)

Es wurden verschiedene NdBR mit sprungartiger Erhöhung des Molekulargewichts hergestellt.

### Vergleichsbeispiel 1: NdBR mit kleinem Mooneysprung < 50%, ohne Vergelung

Polymerisation:

Ein trockener, mit Stickstoff inertisierter 20 L-Stahlautoklav wurde mit 8500 g Hexan (über Molsieb getrocknet), 1300 g 1,3-Butadien, 21,4 mmol einer 20%igen Lösung aus Diisobutylaluminiumhydrid in Hexan, 1,44 mmol einer 10%igen Lösung aus Ethylaluminiumsesquichlorid in Hexan, sowie 1,44 mmol einer 40%igen Lösung von Neodymversatat in Hexan eingebracht. Es wurde unter Rühren auf 73 °C erwärmt und unter Rühren 60 min polymerisiert. Es wurde Umsatzprobe genommen. Der Butadienumsatz betrug nach der Polymerisation 99,7 %.

Die Polymerisation wurde durch Zugabe von 3,75 g Stearinsäure (0,25 phr) gestoppt und mit 1,3 g Irganox 1520 (0,1 phr) stabilisiert. Die Lösung wurde weitere 15 min bei 65°C gehalten.

Ausgangsmooney-Viskosität (ML 1+4 bei 100 °C): 39 MU Mooney-Stress-Relaxation (MSR bei 100°C gemäß ASTM D 1646-00): MSR (2) = 0,64.

Modifizierung:

720 g der Polymerlösung wurden in einen 2 L-Glasreaktor überführt. Zur Modifizierung wurde 1,71 g einer Lösung von Dischwefeldichlorid in Hexan mit einer Konzentration von 11 % (0,2 phr) zugegeben. Die Lösung wurde 15 min bei 65°C gerührt. Das Polymer wurde durch Einleiten in 5 kg Ethanol ausgefällt, mit Irganox 1520 (0,2 phr) stabilisiert und bei 70 °C im Vakuum getrocknet. Auswaage nach dem Trocknen: 95 g

Endmooney-Viskosität (ML 1+4 bei 100 °C): 44 MU;
Mooney-Stress-Relaxation MSR (3) = 0,52;
Gelgehalt <0,3 Gew.- %
Mikrostruktur: 97,5 Gew.- % 1,4-cis; 1,7 Gew.- % 1,4-trans; 0,8 Gew.- % 1,2-vinyl

Bei einem kleinen Mooney-Sprung von 12,8 % über der Ausgangsmooney-Viskosität weist das hochmolekulare Neodym-katalysierte Polybutadien keine Gelbildung auf.
Der Modifizierungskoeffizient (MK) beträgt 1,2.

**Vergleichsbeispiel 2: NdBR mit hohem Mooneysprung > 50%, mit Vergelung**

Polymerisation:

Ein trockener, mit Stickstoff inertisierter 20 L-Stahlautoklav wurde mit 8500 g Hexan (über Molsieb getrocknet), 1300 g 1,3-Butadien, 21,3 mmol einer 20%igen Lösung aus Diisobutylaluminiumhydrid in Hexan, 1,44 mmol einer 10%igen Lösung aus Ethylaluminiumsesquichlorid in Hexan, sowie 1,44 mmol einer 40%igen Lösung von Neodymversatat in Hexan eingebracht. Es wurde unter Rühren auf 73 °C erwärmt und unter Rühren 60 min polymerisiert. Es wurde Umsatzprobe genommen. Der Butadienumsatz betrug nach der Polymerisation 99,7 %.
Die Polymerisation wurde durch Zugabe von 6,5 g Stearinsäure gestoppt. Die Lösung wurde weitere 15 min bei 65°C gehalten.
Ausgangsmooney-Viskosität (ML 1+4 bei 100 °C): 36 MU MSR (2)= 0,77.

Modifizierung:

720 g der Polymerlösung wurden in einen 2 L-Glasreaktor überführt. Zur Modifizierung wurde 3,42 g einer Lösung von Dischwefeldichlorid in Hexan mit einer Konzentration von 11 % (0,4 phr) zugegeben. Die Lösung wurde 15 min bei 65°C gerührt. Das Polymer wurde durch Einleiten in 5 kg Ethanol ausgefällt, mit Irganox 1520 (0,2 phr) stabilisiert und bei 70 °C im Vakuum getrocknet. Auswaage nach dem Trocknen: 95 g

Endmooney-Viskosität (ML 1+4 bei 100 °C): 82 MU;
MSR (3) = 0,35;
Gelgehalt = 8,5 Gew.-%
Mikrostruktur: 97,6 Gew.- % 1,4-cis; 1,7 Gew.- % 1,4-trans; 0,7 Gew.- % 1,2-vinyl

Bei einem hohen Mooney-Sprung von 127,8 % über der Ausgangsmooney-Viskosität weist das hochmolekulare Neodym-katalysierte Polybutadien eine Gelbildung von 8,5 Gew.-% auf.
Der Modifizierungskoeffizient ist demnach 2,2.

**Erfindungsgemäßes Beispiel 1: NdBR mit hohem Mooneysprung von 83%, ohne Vergelung**

Polymerisation:

Ein trockener, mit Stickstoff inertisierter 20 L-Stahlautoklav wurde mit 8500 g Hexan (über Molsieb getrocknet), 1300 g 1,3-Butadien, 29,2 mmol einer 20%igen Lösung aus Diisobutylaluminiumhydrid in Hexan, 1,44 mmol einer 10%igen Lösung aus Ethylaluminiumsesquichlorid in Hexan, sowie 1,44 mmol einer 40%igen Lösung von Neodymversatat in Hexan eingebracht. Es wurde unter Rühren auf 73 °C erwärmt und unter Rühren 60 min polymerisiert. Es wurde Umsatzprobe genommen. Der Butadienumsatz betrug nach der Polymerisation 99,5 %.
Die Polymerisation wurde durch Zugabe von 6,5 g Stearinsäure (0,5 phr) gestoppt. Die Lösung wurde weitere 15 min bei 65°C gehalten.
Ausgangsmooney-Viskosität (ML 1+4 bei 100 °C): 24 MU MSR (2) = 0,78.

Modifizierung:

720 g der Polymerlösung wurden in einen 2 L-Glasreaktor überführt. Zur Modifizierung wurde 1,24 g einer Lösung von Dischwefeldichlorid in ESBO mit einer Konzentration von 54 % (0,7 phr) zugegeben. Die Lösung wurde 15 min bei 65°C gerührt. Das Polymer wurde durch Einleiten in 5 kg Ethanol ausgefällt, mit Irganox 1520 (0,2 phr) stabilisiert und bei 70 °C im Vakuum getrocknet. Auswaage nach dem Trocknen: 95,2 g

Endmooney-Viskosität (ML 1+4 bei 100 °C): 44 MU;
MSR (3) = 0,46;
Gelgehalt < 0,3 Gew.- %
Mikrostruktur: 97,4 Gew.- % 1,4-cis; 1,9 Gew.- % 1,4-trans; 0,6 Gew.- % 1,2-vinyl.

Der Modifizierungskoeffizient ist demnach 1,7.

**Erfindungsgemäßes Beispiel 2: NdBR mit hohem Mooneysprung von 55%, ohne Vergelung**

Polymerisation:

Ein trockener, mit Stickstoff inertisierter 20 L-Stahlautoklav wurde mit 8500 g Hexan (über Molsieb getrocknet), 1300 g 1,3-Butadien, 21 mmol einer 20%igen Lösung aus Diisobutylaluminiumhydrid in Hexan, 1,44 mmol einer 10%igen Lösung aus Ethylaluminiumsesquichlorid in Hexan, sowie 1,44 mmol einer 40%igen Lösung von Neodymversatat in Hexan eingebracht. Es wurde unter Rühren auf 73 °C erwärmt und unter Rühren 60 min polymerisiert. Es wurde Umsatzprobe genommen. Der Butadienumsatz betrug nach der Polymerisation 98,7 %.
Die Polymerisation wurde durch Zugabe von 6,5 g Stearinsäure (0,5 phr) gestoppt. Die Lösung wurde weitere 15 min bei 65°C gehalten
Ausgangsmooney-Viskosität (ML 1+4 bei 100 °C): 40 MU MSR (2) = 0,65.

Modifizierung:

720 g der Polymerlösung wurden in einen 2 1-Glasreaktor überführt. Zur Modifizierung wurde 0,40 g einer Lösung von Dischwefeldichlorid in ESBO mit einer Konzentration von 64 % (0,3 phr) zugegeben. Die Lösung wurde 15 min bei 65°C gerührt. Das Polymer wurde durch Einleiten in 5 kg Ethanol ausgefällt, mit Irganox 1520 (0,2 phr) stabilisiert und bei 70 °C im Vakuum getrocknet. Auswaage nach dem Trocknen: 95,1 g.

Endmooney-Viskosität (ML 1+4 bei 100 °C): 62 MU,
MSR (3) = 0,36;
Gelgehalt < 0,3 Gew.- %
Mikrostruktur: 97,4 Gew.- % 1,4-cis; 2,0 Gew.- % 1,4-trans; 0,6 Gew.- % 1,2-vinyl
Molmasse: Mn = 202 kg/mol, Mw = 418 kg/mol, Mz = 1050 kg/mol; Polydispersität (Mw/Mn) = 2,07
Lösungsviskosität: 218 mPas

Der Modifizierungskoeffizient ist demnach 1,8.

**Nicht erfindungsgemäßes Beispiel 3: NdBR mit hohem Mooneysprung von 97%, ohne Vergelung**

Polymerisation:

Ein trockener, mit Stickstoff inertisierter 20 1-Stahlautoklav wurde mit 8500 g Hexan (über Molsieb getrocknet), 1300 g 1,3-Butadien, 21 mmol einer 20%igen Lösung aus Diisobutylaluminiumhydrid in Hexan, 1,44 mmol einer 10%igen Lösung aus Ethylaluminiumsesquichlorid in Hexan, sowie 1,44 mmol einer 40%igen Lösung von Neodymversatat in Hexan eingebracht. Es wurde unter Rühren auf 73 °C erwärmt und unter Rühren 60 min polymerisiert. Es wurde Umsatzprobe genommen. Der Butadienumsatz betrug nach der Polymerisation 99,5 %. Die Polymerisationslösung wurde nicht abgestoppt und direkt weiter verarbeitet. Es wurde eine Polymerprobe gezogen und der Polymermooney ermittelt.
Ausgangsmooney-Viskosität Präpolymer (ML 1+4 bei 100 °C): 37 MU MSR(2) = 0,65.

Modifizierung:

720 g der Polymerlösung wurden in einen 2 L-Glasreaktor überführt. Zur Modifizierung wurde 0,76 g einer Lösung von Dischwefeldichlorid in ESBO mit einer Konzentration von 37,5 % (0,3 phr) zugegeben. Die Lösung wurde 15 min bei 65°C gerührt. Das Polymer wurde durch Einleiten in 5 kg Ethanol ausgefällt, mit Irganox 1520 (0,2 phr) stabilisiert und bei 70 °C im Vakuum getrocknet. Auswaage nach dem Trocknen: 95,1 g

Endmooney-Viskosität (ML 1+4 bei 100 °C): 73 MU: MSR(3) = 0,33;
Gelgehalt < 0,3 Gew.- %
Mikrostruktur: 97,7 Gew.- % 1,4-cis; 1,7 Gew.- % 1,4-trans; 0,6 Gew.- % 1,2-vinyl.
Der Modifizierungskoeffizient ist demnach 1,97.

Alle nach dem erfindungsgemäßen Verfahren hergestellten NdBR zeigen einen hohen Mooneysprung auf. Die Endmooney-Viskositäten sind größer als 50 % über der Ausgangsmooney-Viskosität des NdBRs und weisen einen Gelgehalt von < 0,3 Gew.-% auf.

Prüfungen:

A: Bestimmung des Gelgehaltes von Polybutadien in Styrol als gravimetrisches Verfahren analog der Methode BAYELAS MO AQ 259 - A LAB:

25,0 g Polymer werden auf der Laborwaage auf 0,1 g genau abgewogen. Die Ränder werden vorher abgeschnitten und verworfen. Das Polymer wird in kleine Stücke geschnitten. In einer 11 Weithalsflasche werden 850 ml filtriertes Styrol vorgelegt und das Polymer auf der Schüttelmaschine ca. 4 Stunden gelöst.

Das zuvor ausgeglühte Drahtnetz bestehend aus einem Drahtgewebe mit Maschenweite 0,036 mm, 0 50 mm wird zur Abkühlung in einem Trockengläschen in den Exsikkator gegeben. Nach dem Abkühlen wird das Drahtnetz dem Trockengläschen entnommen und auf der Analysenwaage auf 0,1 mg genau ausgewogen. Es ergibt sich das Gewicht A. Jeweils 100 ml filtriertes Styrol werden in drei Bechergläsern bereitgestellt. Das Drahtnetz mit einem Durchmesser von 50 mm wird in das Metall-Filtrationssystem "Gelman" eingelegt (Dichtung-Filter-Dichtung) und der Trichteraufsatz wird angeschraubt.
Nun gießt man die Polymerlösung durch das Filter. Das erste der drei mit Styrol beschickten Bechergläser wird zum Spülen der Weithalsflasche benutzt und diese Lösung ebenfalls durch das Filter gegeben. Mit den beiden weiteren Styrol-Portionen wird das Filter nachgespült.
Das Filter wird nun vorsichtig mit einer Pinzette entnommen und auf einen sauberen Zellstoff gelegt. Der Rand des Filters wird mit der Pinzette vorsichtig angedrückt. Mit der Lupe beobachtet man das verdampfende Styrol. Das feuchte, noch mit Styrol benetzte Drahtfilter wird mit abnehmender Styrolmenge sichtbar heller. Sind alle Maschen des Filters styrolfrei, wird es sofort auf der Waage zurückgewogen. Es ergibt sich das Gewicht B.
Nach Rückwaage des Filters, wird zur Ermittlung des Trockengel-Gehalt im Trockenschrank 15 Minuten bei 100°C ($\pm$ 5°C) getrocknet. Dabei befindet sich das Filter in einem offenen Trockengläschen. Nach Trocknung wird das Gläschen samt Filter zur Abkühlung etwa 10 Minuten in den Exsikkator gegeben und anschließend erneut gewogen. Es ergibt sich das Gewicht C.

Berechnungen:

$$\text{Nassgel (wet gel)} = \frac{(B - A) * 10^6}{25} \quad \text{[ppm]}$$

$$\text{Trockengel (dry gel)} = (C - A) * 10^6 \quad \text{[ppm]}$$

$$\text{Quellindex} = \frac{\text{Nassgel}}{\text{Trockengel}} \quad \text{[ohne Dimension]}$$

B: Mooneyviskosität und Mooney-Stress-Relaxation nach ASTM D 1646-00

C: Lösungsviskosität nach ISO 3105:

5,43% Polymerlösung in Toluol wird bei Raumtemperatur mit einem Rotationsviskosimeter Typ Brookfield DV-I gemessen.

D: GPC wurde von der Firma Currenta durchgeführt.

E: Mikrostrukturbestimmung

Currenta, ELA 101: Eine Lösung des Polymeren in Toluol wird auf ein KBr Fenster gegeben, das Lösemittel wird verdampft und der Polymerfilm zwischen 2 KBr-Fenster mittel FTIR Spektroskopie vermessen.
ESBO: Epoxdiertes Soyabohnenöl der Firma Cognis
Irganox 1520: 4,6-Bis(octylthiomethyl)-o-cresol der Firma BASF

**II. Herstellung von Kautschukmischungen und Vulkanisaten**

Vergleichsbeispiel 2 ist wegen des sehr hohen Gelgehaltes nicht für einen Compoundtest geeignet.
Es wurden Kautschukmischungen hergestellt, die BUNA™ CB 22 als Nd-katalysierte Polybutadien, ohne Mooney-Sprung, sowie das Polymer aus Vergleichsbeispiel 1 und das erfindungsgemäße Polymer aus Beispiel 2 enthalten. Die Mischungsbestandteile sind in Tabelle 2 aufgelistet. Die Mischungen wurden zunächst ohne Schwefel und Beschleuniger in einem 1,5-L Kneter hergestellt. Die Mischungsbestandteile Schwefel und Beschleuniger wurden anschließend auf einer Walze bei 40°C zugemischt.
Das NdBR aus Vergleichsbeispiel 1 hat eine Ausgangsmooney-Viskosität von 39 MU; das erfindungsgemäße NdBR aus Beispiel 2 hat eine Ausgangsmooney-Viskosität von 39 MU. Buna CB22, ohne Mooneysprung, hat eine Mooneyviskosität von 63 MU.
Für die Mischungsstudien wurden folgende Substanzen eingesetzt:

Tabelle 1:

| Handelsname | Hersteller |
|---|---|
| BUNA™ CB 22 als Nd-Polybutadien | Lanxess Deutschland GmbH |
| CORAX N 326 als Ruß | Evonik Degussa GmbH |
| VIVATEC 500 als Öl | Hansen und Rosenthal KG |
| ZINKWEIß ROTSIEGEL als Zinkoxid | Grillo Zinkoxid GmbH |
| EDENOR C 18 98-100 als Stearinsäure | Caldic Deutschland GmbH |
| VULKANOX 4020/LG als Stabilisator | Lanxess Deutschland GmbH |
| VULKANOX HS/LG als Stabilisator | Lanxess Deutschland GmbH |
| VULKACIT® CZ/EGC als Beschleuniger | Lanxess Deutschland GmbH |
| RHENOGRAN IS 60-75 als Schwefel | RheinChemie Rheinau GmbH |
| TSR / RSS 3 DEFO 700 | Naturkautschuk vom Typ Defo 700 |

Tabelle 2: Zusammensetzung der Mischungen

| NdBR | V1 | E2 | V2 | V1* | E2* | V2* |
|---|---|---|---|---|---|---|
| Vergleichsbeispiel 1 | 100 | | | 70 | | |
| Erfindungsgemäßes Beispiel 2 | | 100 | | | 70 | |
| Buna CB 22 | | | 100 | | | 70 |
| TSR / RSS 3 DEFO 700 | | | | 30 | 30 | 30 |

(fortgesetzt)

| NdBR | V1 | E2 | V2 | V1* | E2* | V2* |
|---|---|---|---|---|---|---|
| CORAX N 326 | 50 | 50 | 50 | 50 | 50 | 50 |
| VIVATEC 500 | 4 | 4 | 4 | 4 | 4 | 4 |
| ZINKWEISS ROTSIEGEL | 2 | 2 | 2 | 2 | 2 | 2 |
| EDENOR C 18 98-100 | 3 | 3 | 3 | 3 | 3 | 3 |
| VULKANOX 4020/LG | 2 | 2 | 2 | 2 | 2 | 2 |
| VULKANOX HS/LG | 3 | 3 | 3 | 3 | 3 | 3 |
| VULKACIT CZ/EGC | 1,4 | 1,4 | 1,4 | 1,4 | 1,4 | 1,4 |
| RHENOGRAN IS 60-75 | 2,36 | 2,36 | 2,36 | 2,36 | 2,36 | 2,36 |

Für die Beurteilung der Compoundierbarkeit wurden die Walzfelle vor und nach der Einmischung der Kautschukchemikalien bewertet. Die Mischungen V1 und V1* sowie der erfindungsgemäßen E2 und E2* zeigten glatte Walzfelle, während die Mischungen V2 und V2* mit dem nicht modifizierten Buna CB22 inhomogene Walzfelle zeigte, die sehr stark beuteln und nur unzureichenden Kontakt zur Walze besitzen.

An den Vulkanisaten wurden folgende Eigenschaften nach den genannten Normen bestimmt:

DIN 53505: Shore A-Härte bei 23°C und 70°C
DIN 53512: Rückprallelastizität bei 23°C und 70°C ("R23")
DIN 53504: Spannungswerte bei 10%, 25%, 50%, 100%, 200% und 300 % Dehnung ($\sigma_{10}$, $\sigma_{25}$, $\sigma_{50}$, $\sigma_{100}$, $\sigma_{200}$ und $\sigma_{300}$), Zugfestigkeit sowie Bruchdehnung
DIN 53516: Abrieb

Für die Bestimmung der dynamischen Eigenschaften (Temperaturabhängigkeit des Speichermoduls E' im Temperaturbereich -60°C bis 0°C sowie tan $\delta$ bei 60°C) wurde ein Eplexor-Gerät (Eplexor 500 N) der Firma Gabo-Testanlagen GmbH, Ahlden, Deutschland eingesetzt. Die Messungen wurden nach DIN53513 bei 10 Hz an Zylinderproben im Temperaturbereich -100°C und +100°C bei einer Heizrate von 1K/min. ermittelt. Die Messungen erfolgten im Kompressionsmodus bei einer statischen Kompression von 1% und einer dynamischen Verformung von 0,1%.

Mit der Methode wurden folgende Messgrößen erhalten, die nach ASTM 5992-96 bezeichnet werden:

E' (-60°C): Speichermodul bei -60°C
E' (-50°C): Speichermodul bei -50°C
E' (-40°C): Speichermodul bei -40°C
E' (-30°C): Speichermodul bei -30°C
E' (-20°C): Speichermodul bei -20°C
E' (-10°C): Speichermodul bei -10°C
E' (0°C): Speichermodul bei 0°C

sowie

tan $\delta$ (60°C): Verlustfaktor (E''/E') bei 60°C.

E' liefert ein Indiz für den Griff der Winterreifen-Lauffläche auf Eis und Schnee. Je niedriger E' ist, umso besser ist der Griff.

Tan $\delta$ (60°C) ist ein Maß für den Hystereseverlust beim Rollen des Reifens. Je niedriger tan $\delta$ (60°C) ist, umso niedriger ist der Rollwiderstand des Reifens.

Tabelle 3 zeigt die Vulkanisateigenschaften der Mischungen auf.

Tabelle 3: Vulkanisateigenschaften

| | | V1 | E2 | V2 | V1* | E2* | V2* |
|---|---|---|---|---|---|---|---|
| Prüfung | Einheit | | | | | | |
| ML 1+4/100 | MU | 49,7 | 59,0 | 75,1 | 50,5 | 56,9 | 68,7 |

EP 2 861 629 B1

(fortgesetzt)

|  |  | V1 | E2 | V2 | V1* | E2* | V2* |
|---|---|---|---|---|---|---|---|
| Härte ShA @ 23°C |  | 59,5 | 60,4 | 61,6 | 58,0 | 59,1 | 60,3 |
| Zug-Dehnung |  |  |  |  |  |  |  |
| S10 @ 23°C | MPa | 0,5 | 0,5 | 0,6 | 0,5 | 0,5 | 0,5 |
| S300 @ 23°C | MPa | 7,3 | 8,5 | 8,3 | 8,3 | 8,9 | 8,6 |
| S300 / S10 |  | 14,6 | 17 | 13,8 | 16,6 | 17,8 | 17,2 |
| MTS Amplituden Sweep @ 60°C |  |  |  |  |  |  |  |
| G* (0,5%) 1.Messung |  | 1,91 | 1,89 | 1,91 | 1,94 | 1,88 | 1,98 |
| G* (15%) 1.Messung |  | 1,16 | 1,19 | 1,22 | 1,12 | 1,12 | 1,19 |
| Tan d maximum |  | 0,13 | 0,121 | 0,116 | 0,137 | 0,122 | 0,119 |
| Rückprallelastizität |  |  |  |  |  |  |  |
| @ 60°C, | % | 63,3 | 64,6 | 65,7 | 61,8 | 63,3 | 62,0 |
| Dyn. Dämpfung DIN 53513 |  |  |  |  |  |  |  |
| E'(0 °C) | MPa | 10,37 | 9,43 | 9,34 | 12,42 | 10,67 | 12,54 |
| E' (23 °C) | MPa | 9,2 | 8,47 | 8,43 | 10,7 | 9,3 | 10,92 |
| E' (60 °C) | MPa | 8,34 | 7,83 | 7,85 | 9,19 | 8,19 | 9,56 |
| E"(0 °C) | MPa | 0,87 | 0,74 | 0,63 | 1,17 | 0,94 | 1,09 |
| E" (23 °C) | MPa | 0,67 | 0,57 | 0,49 | 0,83 | 0,67 | 0,78 |
| E" (60 °C) | MPa | 0,55 | 0,44 | 0,34 | 0,59 | 0,47 | 0,54 |
| E*(0 °C) | MPa | 10,41 | 9,46 | 9,36 | 12,47 | 10,71 | 12,59 |
| E* (23 °C) | MPa | 9,22 | 8,49 | 8,44 | 10,73 | 9,33 | 10,95 |
| E* (60 °C) | MPa | 8,36 | 7,84 | 7,86 | 9,21 | 8,21 | 9,58 |
| tan d (0°C) |  | 0,085 | 0,08 | 0,068 | 0,095 | 0,089 | 0,088 |
| tan d (23 °C) |  | 0,073 | 0,068 | 0,059 | 0,078 | 0,073 | 0,072 |
| tan d (60 °C) |  | 0,067 | 0,058 | 0,045 | 0,065 | 0,058 | 0,058 |
| Abrasion DIN 53516 |  |  |  |  |  |  |  |
| Abrieb | mm$^3$ | 13 | 12 | 15 | 29 | 29 | 33 |

Die erfindungsgemäßen E2 und E2* zeigen gegenüber den Vergleichsbeispielen V1 und V1* eine deutliche Verbesserung der Indikatoren für den niedrigen Rollwiderstand, wie eine hohe Rückprallelastizität bei 60°C, ein niedriges Tangens Delta maximum im MTS-Test bei 60°C und ein niedriges Tangens Delta bei 60°C im Eplexortest, bessere Ergebnisse im Zug-Dehnungs-Test, ersichtlich aus einem höheren Quotienten aus S300/S10 sowie sehr gute niedrige Werte im Abriebstest.
Gegenüber dem nicht modifizierten Buna CB22 in den Vergleichsbeispielen V2 und V2* zeigen die erfindungsgemäßen Beispiele E2 und E2* bei vergleichbaren guten Compoundeigenschaften eine deutliche Verbesserung in der Verarbeitungsqualität, ersichtlich an einem deutlich glatten und homogenen Walzfell und an einem perfekten Garvey-Extrudat.

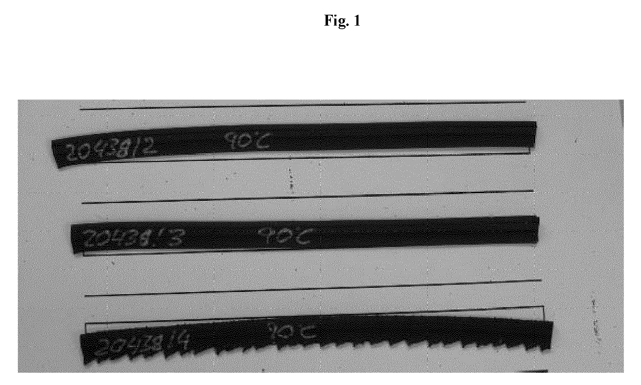

Fig. 1. zeigt die Garvey-Extrudate von Vergleichsbeispiel V1, erfindungsgemäßes Beispiel E2 und Vergleichsbeispiel V2 (von oben nach unten) bei 90°C und einer Umdrehung von 50 UpM.
V1 und E2 ergeben glatte Extrudate, während V2 ein starkes Sägezahnprofil besitzt.
Insgesamt kann gezeigt werden, dass durch die erfindungsgemäßen Polymere mit einem großem Mooneysprung von >50% Mischungen hergestellt werden können, die einfach zu verarbeiten sind, glatte Extrudate ergeben, jedoch in den physikalischen Compoundeigenschaften den schwer zu verarbeitenden nicht modifizierten Neodymkata-lysierten Polybutadienkautschuken entsprechen.

13

**Patentansprüche**

1. Verfahren zur sprungartigen Erhöhung der Mooney-Viskosität bei der Herstellung von hochmolekularem Polybutadien mit einem Anteil an cis-1,4-Einheiten von > 95 Gew.-% und einem Anteil an 1,2-Vinyl-Gehalt von < 1 Gew.-%, **dadurch gekennzeichnet, dass** man

   1) mindestens ein Monomer, ausgewählt aus Butadien und/oder Isopren, in Gegenwart mindestens eines inerten, organischen Lösungsmittels und in Gegenwart von mindestens einem Katalysator auf Basis von Neodymcarboxylat bei Temperaturen von -20°C bis 150°C polymerisiert,
   2) anschließend die Polymerisation durch Zugabe von protischen Verbindungen stoppt und
   3) danach zum Polymerisat Schwefelchloride zugibt, wobei die Schwefelchloride vor der Zugabe mit einer Carbonsäure, Fettsäure und/oder Fettsäureester behandelt werden.

2. Verfahren nach Anspruch 1 umfassend folgende Verfahrensschritte:

   a) Katalysatorenherstellung mit oder ohne Präformierung unter der Verwendung von Katalysatorsystemen basierend auf Neodym bestehend aus

      - Komponente A: einem Alkoholat oder einem Carboxylat von Neodym, vorzugsweise Neodymversatat,
      - Komponente B: einem Dialkylaluminiumhydrid, vorzugsweise Diisobutylaluminiumhydrid (DIBAH),
      - Komponente C: einem Dien, vorzugsweise Butadien oder Isopren und
      - Komponente D: und wenigstens einer Organometallhalogenide, vorzugsweise Ethylaluminiumsesquichlorid (EASC),

   b) Polymerisation der Monomere bei einer Temperatur zwischen -20°C und 150°C,
   c) Stoppen der Polymerisation mit protischen Verbindungen und
   d) Zugabe von Schwefelchloriden, wobei die Schwefelchloride vor der Zugabe mit einer Carbonsäure, Fettsäure und/oder Fettsäureester behandelt werden/wird.

3. Verfahren nach Anspruch 1, **dadurch gekennzeichnet, dass** es sich bei den protischen Verbindungen um Carbonsäuren und/oder Fettsäuren handelt.

4. Verfahren nach Anspruch 1, **dadurch gekennzeichnet, dass** es sich bei den protischen Verbindungen um Stearinsäure oder Laurinsäure handelt.

5. Verfahren nach Anspruch 1, **dadurch gekennzeichnet, dass** die Zugabe von den vorbehandelten Schwefelchloriden bei einer Temperatur von 20°C bis 150°C, bevorzugt bei 50°C bis 120°C durchgeführt wird.

6. Verfahren nach Anspruch 1, **dadurch gekennzeichnet, dass** ein Stabilisator zugesetzt wird, bevorzugt wird der Stabilisator nach der Zugabe von Schwefelchloriden zugesetzt.

7. Verfahren nach Anspruch 1, **dadurch gekennzeichnet, dass** 0,05 bis 0,7 Gew.-Teile, bevorzugt 0,1 bis 0,4 Gew.-Teile, Schwefelchloride, auf 100 Gew.-Teile Dienkautschuk zugegeben werden.

8. Verfahren nach Anspruch 1, **dadurch gekennzeichnet, dass** das es sich bei den Schwefelchloriden um Dischwefeldichlorid, Schwefeldichlorid und/oder Thionylchlorid handelt.

9. Verfahren nach Anspruch 1 oder 7, **dadurch gekennzeichnet, dass** das Mengenverhältnis von Schwefelchloriden bzw. Dischwefeldichlorid, Schwefeldichlorid und/oder Thionylchlorid zu Carbonsäure, Fettsäure und/oder Fettsäureester 1 : 0,01 bis 1 : 10 beträgt.

10. Verfahren nach Anspruch 1, **dadurch gekennzeichnet, dass** es sich bei der Carbonsäure um Verbindungen aus der Gruppe der Carbonsäuren mit 8 bis 20 Kohlenstoffatomen, vorzugsweise Versaticsäure, Octansäure oder iso-Octansäure, handelt.

11. Verfahren nach Anspruch 1, **dadurch gekennzeichnet, dass** es sich bei der Fettsäure um gesättigte, einfach oder mehrfach ungesättigte pflanzliche oder tierische Fettsäuren, vorzugsweise Laurinsäure, Myristinsäure, Palmitinsäure oder Ölsäure, handelt.

12. Verfahren nach Anspruch 1, **dadurch gekennzeichnet, dass** es sich bei dem Fettsäureester um natürliche oder modifizierte, gesättigte, einfach oder mehrfach ungesättigte pflanzliche oder tierische Fettsäureester, vorzugsweise epoxydiertes Sojabohnenöl, handelt.

13. Verfahren nach Anspruch 1, **dadurch gekennzeichnet, dass** das nach Schritt 3) erhaltene Polybutadien eine sprungartige Erhöhung der Mooney-Viskosität (ML 1+4 bei 100 °C) um mindestens 50%, bezogen auf die Mooney-Viskosität (ML 1+4 bei 100 °C) des Polybutadiens nach Schritt 2) aufweist.

14. Verfahren nach Anspruch 1, **dadurch gekennzeichnet, dass** das Polybutadien nach Schritt 2) eine Mooney-Viskosität (ML 1+4 bei 100 °C) (Ausgangsmooney-Viskosität) von mindestens 20 MU, bevorzugt 20 - 25 MU, besonders bevorzugt mindestens 40 MU aufweist und nach der Zugabe von Schwefelchloriden, bevorzugt Dischwefeldichlorid, Schwefeldichlorid und/oder Thionylchlorid im Schritt 3), eine Mooney-Viskosität (ML 1+4 bei 100 °C) (Endmooney-Viskosität) von mindestens 30 MU, bevorzugt 40 - 50 MU, besonders bevorzugt 60 -80 MU aufweist, wobei der Gelgehalt kleiner als 1 Gew.-% beträgt.

15. Hochmolekulares Neodym-katalysiertes Polybutadien erhältlich nach einem der vorgenannten Ansprüche.

16. Hochmolekulares Neodym-katalysiertes Polybutadien nach Anspruch 15, **dadurch gekennzeichnet, dass** das Polybutadien einen Modifizierungskoeffizienten von 1,3 bis 2,5, bevorzugt von 1,4 bis 2,1, aufweist, wobei zunächst der Mooney-Stress-Relaxation nach Schritt 2 (MSR (2)) und nach Schritt 3 (MSR (3)) gemäß ASTM D 1466-00 gemessen wird und der daraus gebildete Quotient aus MSR (2) /MSR (3) den Modifizierungskoeffizienten ergibt.

17. Hochmolekulares Neodym-katalysiertes Polybutadien nach Anspruch 16, **dadurch gekennzeichnet, dass** das Polybutadien Carbonsäure, Fettsäure und/oder Fettsäureester aufweist.

18. Hochmolekulares Neodym-katalysiertes Polybutadien nach Anspruch 17, **dadurch gekennzeichnet, dass** das Polybutadien natürliche oder modifizierte, gesättigte, einfach oder mehrfach ungesättigte pflanzliche oder tierische Fettsäureester, insbesondere epoxydiertes Sojabohnenöl aufweist.

19. Hochmolekularem Neodym-katalysiertem Polybutadien nach Anspruch 15, **dadurch gekennzeichnet, dass** das Polybutadien Versaticsäure, Octansäure, iso-Octansäure, Laurinsäure, Myristinsäure, Palmitinsäure oder Ölsäure aufweist.

20. Kautschukmischungen enthaltend ein Polybutadien gemäß Anspruch 15.

21. Verwendung der Kautschukmischungen gemäß Anspruch 20 zur Herstellung von Formkörpern aller Art, bevorzugt Reifenbauteile oder Golfbälle.

22. Verwendung der Kautschukmischungen gemäß Anspruch 20 für die Schlagzähmodifikation von Thermoplasten.

**Claims**

1. Method for achieving a step increase in Mooney viscosity in production of high-molecular-weight polybutadiene halving > 95% by weight content of cis-1,4 units and < 1% by weight 1,2-vinyl content, **characterized in that**

    1) at least one monomer selected from butadiene and/or isoprene is polymerized at temperatures of from -20°C to 150°C in the presence of at least one inert, organic solvent and in the presence of at least one catalyst based on neodymium carboxylate,
    2) the polymerization is then terminated by addition of protic compounds and
    3) then sulphur chlorides are added to the polymer, and prior to addition these sulphur chlorides are treated with a carboxylic acid, fatty acid and/or fatty acid ester.

2. Method according to Claim 1 comprising the following steps:

    a) catalyst production with or without a preforming process with use of catalyst systems based on neodymium composed of

- component A: an alcoholate or a carboxylate of neodymium, preferably neodymium versatate,
- component B: a dialkylaluminium hydride, preferably diisobutylaluminium hydride (DIBAH),
- component C: a diene, preferably butadiene or isoprene and
- component D: and at least one organometallic halide, preferably ethylaluminium sesquichloride (EASC),

b) polymerization of the monomers at a temperature of from -20°C to 150°C,

c) use or protic compounds to terminate the polymerization and

d) addition of sulphur chlorides, where the sulphur chlorides is/are treated with a carboxylic acid, fatty acid and/or fatty acid ester prior to addition.

3. Method according to Claim 1, **characterized in that** the protic compounds involve carboxylic acids and/or fatty acids.

4. Method according to Claim 1, **characterized in that** the protic compounds involve stearic acid or lauric acid.

5. Method according to Claim 1, **characterized in that** the temperature at which the addition of the pretreated sulphur chlorides takes place is from 20°C to 150°C, preferably from 50°C to 120°C.

6. Method according to Claim 1, **characterized in that** a stabilizer is added, and the stabilizer is preferably added after the addition of sulphur chlorides.

7. Method according to Claim 1, **characterized in that** the amount of sulphur chlorides added is from 0.05 to 0.7 part by weight, preferably from 0.1 to 0.4 part by weight, for every 100 parts by weight of diene rubber.

8. Method according to Claim 1, **characterized in that** the sulphur chlorides involve disulphur dichloride, sulphur dichloride and/or thionyl chloride.

9. Method according to Claim 1 or 7, **characterized in that** the quantitative ratio of sulphur chlorides or disulphur dichloride, sulphur dichloride and/or thionyl chloride to carboxylic acid, fatty acid and/or fatty acid ester is from 1 : 0.01 to 1 : 10.

10. Method according to Claim 1, **characterized in that** the carboxylic acid involves compounds from the group of the carboxylic acids having from 8 to 20 carbon atoms, preferably versatic acid, octanoic acid or isooctanoic acid.

11. Method according to Claim 1, **characterized in that** the fatty acid involves saturated or mono- or polyunsaturated vegetable or animal fatty acids, preferably lauric acid, myristic acid, palmitic acid or oleic acid.

12. Method according Claim 1, **characterized in that** the fatty acid ester involves natural or modified, saturated or mono- or polyunsaturated vegetable or animal fatty acid esters, preferably epoxidized soya bean oil.

13. Method according to Claim 1, **characterized in that** the polybutadiene obtained after step 3) exhibits a step increase of at least 50% in Mooney viscosity (ML 1+4 at 100°C), based on the Mooney viscosity (ML 1+4 at 100°C) of the polybutadiene after step 2).

14. Method according to Claim 1, **characterized in that** the Mooney viscosity (ML 1+4 at 100°C) (initial Mooney viscosity) of the polybutadiene after step 2) is at least 20 MU, preferably from 20 to 25 MU, particularly preferably at least 40 MU, and the Mooney viscosity (ML 1+4 at 100°C) (final Mooney viscosity) of the polybutadiene after addition of sulphur chlorides, preferably disulphur dichloride, sulphur dichloride and/or thionyl chloride in step 3) is at least 30 MU, preferably from 40 to 50 MU, particularly preferably from 60 to 80 MU, where gel content is smaller than 1% by weight.

15. High-molecular-weight neodymium-catalysed polybutadiene obtainable according to any of the preceding claims.

16. High-molecular-weight neodymium-catalysed polybutadiene according to Claim 15, **characterized in that** the modification coefficient of the polybutadiene is from 1.3 to 2.5, preferably from 1.4 to 2.1, where Mooney stress relaxation is initially measured after step 2 (MSR (2)) and after step 3 (MSR (3)) in accordance with ASTM D 1466-00 and then the resultant quotient MSR (2)/MSR (3) gives the modification coefficient.

17. High-molecular-weight neodymium-catalysed polybutadiene according to Claim 16, **characterized in that** the polybutadiene comprises carboxylic acid, fatty acid and/or fatty acid ester.

**18.** High-molecular-weight neodymium-catalysed polybutadiene according to Claim 17, **characterized in that** the polybutadiene comprises natural or modified, saturated or mono- or polyunsaturated vegetable or animal fatty acid esters, in particular epoxidized soya bean oil.

**19.** High-molecular-weight neodymium-catalysed polybutadiene according to Claim 15, **characterized in that** the polybutadiene comprises versatic acid, octanoic acid, isooctanoic acid, lauric acid, myristic acid, palmitic acid or oleic acid.

**20.** Rubber mixtures comprising a polybutadiene according to Claim 15.

**21.** Use of the rubber mixtures according to Claim 20 for the production of mouldings of any type, preferably tyre components or golf balls.

**22.** Use of the rubber mixtures according to Claim 20 for the impact-modification of thermoplastics.

**Revendications**

**1.** Procédé d'augmentation brusque de la viscosité de Mooney lors de la fabrication de polybutadiène de poids moléculaire élevé ayant une proportion d'unités cis-1,4 > 95 % en poids et une proportion de 1,2-vinyle < 1 % en poids, **caractérisé en ce que**

1) au moins un monomère, choisi parmi le butadiène et/ou l'isoprène, est polymérisé en présence d'au moins un solvant organique inerte et en présence d'au moins un catalyseur à base de carboxylate de néodyme à des températures de -20 °C à 150 °C, puis
2) la polymérisation est arrêtée par ajout de composés protiques, puis
3) des chlorures de soufre sont ajoutés au polymère, les chlorures de soufre étant traités avant l'ajout avec un acide carboxylique, un acide gras et/ou un ester d'acide gras.

**2.** Procédé selon la revendication 1, comprenant les étapes de procédé suivantes :

a) la fabrication de catalyseurs avec ou sans préformage en utilisant des systèmes catalytiques à base de néodyme constitués par

- composant A : un alcoolate ou un carboxylate de néodyme, de préférence le versatate de néodyme,
- composant B : un hydrure de dialkylaluminium, de préférence l'hydrure de diisobutylaluminium (DIBAH),
- composant C : un diène, de préférence le butadiène ou l'isoprène, et
- composant D : au moins un halogénure d'organométal, de préférence le sesquichlorure d'éthylaluminium (EASC),

b) la polymérisation des monomères à une température comprise entre -20 °C et 150 °C,
c) l'arrêt de la polymérisation avec des composés protiques, et
d) l'ajout de chlorures de soufre, les chlorures de soufres étant traités avant l'ajout avec un acide carboxylique, un acide gras et/ou un ester d'acide gras.

**3.** Procédé selon la revendication 1, **caractérisé en ce que** les composés protiques sont des acides carboxyliques et/ou des acides gras.

**4.** Procédé selon la revendication 1, **caractérisé en ce que** les composés protiques sont l'acide stéarique ou l'acide laurique.

**5.** Procédé selon la revendication 1, **caractérisé en ce que** l'ajout des chlorures de soufre prétraités est réalisé à une température de 20 °C à 150 °C, de préférence de 50 °C à 120 °C.

**6.** Procédé selon la revendication 1, **caractérisé en ce qu'**un stabilisateur est ajouté, le stabilisateur étant de préférence ajouté après l'ajout de chlorures de soufre.

7. Procédé selon la revendication 1, **caractérisé en ce que** 0,05 à 0,7 partie en poids, de préférence 0,1 à 0,4 partie en poids, de chlorures de soufre sont ajoutés, pour 100 parties en poids de caoutchouc diénique.

8. Procédé selon la revendication 1, **caractérisé en ce que** les chlorures de soufre sont le dichlorure de disoufre, le dichlorure de soufre et/ou le chlorure de thionyle.

9. Procédé selon la revendication 1 ou 7, **caractérisé en ce que** la proportion de chlorures de soufre ou de dichlorure de disoufre, de dichlorure de soufre et/ou de chlorure de thionyle par rapport à l'acide carboxylique, l'acide gras et/ou l'ester d'acide gras est de 1:0, 01 à 1:10.

10. Procédé selon la revendication 1, **caractérisé en ce que** l'acide carboxylique consiste en des composés du groupe des acides carboxyliques contenant 8 à 20 atomes de carbone, de préférence l'acide versatique, l'acide octanoïque ou l'acide iso-octanoïque.

11. Procédé selon la revendication 1, **caractérisé en ce que** l'acide gras consiste en des acides gras végétaux ou animaux saturés, mono- ou polyinsaturés, de préférence l'acide laurique, l'acide myristique, l'acide palmitique ou l'acide oléique.

12. Procédé selon la revendication 1, **caractérisé en ce que** l'ester d'acide gras consiste en des esters d'acides gras végétaux ou animaux naturels ou modifiés, saturés, mono- ou polyinsaturés, de préférence l'huile de soja époxydée.

13. Procédé selon la revendication 1, **caractérisé en ce que** le polybutadiène obtenu après l'étape 3) présente une élévation brusque de la viscosité de Mooney (ML 1+4 à 100 °C) d'au moins 50 %, par rapport à la viscosité de Mooney (ML 1+4 à 100 °C) du polybutadiène après l'étape 2).

14. Procédé selon la revendication 1, **caractérisé en ce que** le polybutadiène présente après l'étape 2) une viscosité de Mooney (ML 1+4 à 100 °C) (viscosité de Mooney initiale) d'au moins 20 MU, de préférence de 20 à 25 MU, de manière particulièrement préférée d'au moins 40 MU, et, après l'ajout de chlorures de soufre, de préférence de dichlorure de disoufre, de dichlorure de soufre et/ou de chlorure de thionyle, à l'étape 3), une viscosité de Mooney (ML 1+4 à 100 °C) (viscosité de Mooney finale) d'au moins 30 MU, de préférence de 40 à 50 MU, de manière particulièrement préférée de 60 à 80 MU, la teneur en gel étant inférieure à 1 % en poids.

15. Polybutadiène de poids moléculaire élevé catalysé par du néodyme, pouvant être obtenu selon l'une quelconque des revendications précédentes.

16. Polybutadiène de poids moléculaire élevé catalysé par du néodyme selon la revendication 15, **caractérisé en ce que** le polybutadiène présente un coefficient de modification de 1,3 à 2,5, de préférence de 1,4 à 2,1, la relaxation au stress de Mooney étant mesurée tout d'abord après l'étape 2 (MSR (2)) et après l'étape 3 (MSR (3)) selon ASTM D 1466-00, et le quotient formé par MSR (2)/MSR (3) donnant le coefficient de modification.

17. Polybutadiène de poids moléculaire élevé catalysé par du néodyme selon la revendication 16, **caractérisé en ce que** le polybutadiène comprend un acide carboxylique, un acide gras et/ou un ester d'acide gras.

18. Polybutadiène de poids moléculaire élevé catalysé par du néodyme selon la revendication 17, **caractérisé en ce que** le polybutadiène comprend des esters d'acides gras végétaux ou animaux naturels ou modifiés, saturés, mono- ou polyinsaturés, notamment de l'huile de soja époxydée.

19. Polybutadiène de poids moléculaire élevé catalysé par du néodyme selon la revendication 15, **caractérisé en ce que** le polybutadiène comprend de l'acide versatique, de l'acide octanoïque, de l'acide iso-octanoïque, de l'acide laurique, de l'acide myristique, de l'acide palmitique ou de l'acide oléique.

20. Mélanges de caoutchouc contenant un polybutadiène selon la revendication 15.

21. Utilisation des mélanges de caoutchouc selon la revendication 20 pour la fabrication de corps moulés de tout type, de préférence des composants de pneus ou des balles de golf.

22. Utilisation des mélanges de caoutchouc selon la revendication 20 pour la modification de la résistance aux impacts de thermoplastiques.

Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 10011184 A
- EP 0007027 A1
- EP 1123940 A1
- EP 1650227 A
- EP 0127236 A
- EP 1176157 B1
- DE 1260794 B
- DE 4436059 A1
- EP 1025136 A
- EP 1078939 A
- EP 0447066 A
- DE 2141159 A
- DE 2255577 A
- DE 4435311 A
- EP 0670347 A
- DE 19544469 A

### In der Beschreibung aufgeführte Nicht-Patentliteratur

- **W. HOFMANN.** Kautschuktechnologie. Gentner Verlag, 1980
- **I. FRANTA.** Elastomers and Rubber Compounding Materials. Elsevier, 1989